Europäisches Patentamt

(19) European Patent Office

Office européen des brevets

(11) Publication number: **0 227 610**

**A1**

(12) **EUROPEAN PATENT APPLICATION**

(21) Application number: **86830365.2**

(22) Date of filing: **09.12.86**

(51) Int. Cl.⁴: **B 60 K 28/00**
**B 60 H 1/24**

(30) Priority: **10.12.85 IT 6803385**

(43) Date of publication of application:
**01.07.87 Bulletin 87/27**

(84) Designated Contracting States: **DE FR GB SE**

(71) Applicant: **IVECO FIAT S.p.A.**
**Via Puglia 35**
**I-10156 Torino (IT)**

(72) Inventor: **Filippi, Federico**
**Via Mazzini 40,**
**I-10123 Torino (IT)**

**Wiss, Vittorio**
**Corso Stati Uniti 59 bis**
**I-10129 Torino (IT)**

(74) Representative: **Buzzi, Franco et al**
**c/o Jacobacci-Casetta & Perani S.p.A. Via Alfieri, 17**
**I-10121 Torino (IT)**

(54) **Device for improving the driving safety of a vehicle.**

(57) Device for improving the driving safety of a vehicle, consisting of the use of a pressurised-air source (5, 6) within the passenger compartment (1) of the vehicle and of the periodic direction of a jet of air substantially towards the driver's face by means of this source.

FIG. 1

## Description

Device for improving the driving safety of a vehicle

The present invention relates in general to the driving of vehicles and in particular to safety systems for avoiding the risks of torpor and falling asleep to which vehicle drivers are subject.

The attention of the driver may be reduced in particularly tedious driving conditions and this can, in extreme cases, cause so-called "dropping off". A particularly long journey on a motorway at a constant speed, at night or in poor visibility or during atmospheric precipitation, may give rise to such risks.

The object of the present invention is to solve these problems in a simple and effective manner by improving the driving safety of a vehicle under the conditions described above.

This object is achieved according to the invention by means of a device characterised in that it comprises a pressurised-air source within the passenger compartment of a vehicle including a fan, means for sensing the driving conditions indicative of a possible tendency of the driver to torpor, actuator means for the pressurised-air source, and an electronic control unit supplied with signals by the sensors and arranged to operate the actuator means when the conditions detected by the sensors correspond to predetermined critical conditions.

Further characteristics of the present invention will become apparent from the description which follows with reference to the appended drawings, provided purely by way of non-limiting example, in which:

Figure 1 is a perspective view of the interior of the passenger compartment of a vehicle provided with a device of the present invention, and

Figure 2 is a functional schematic diagram of the device of the invention.

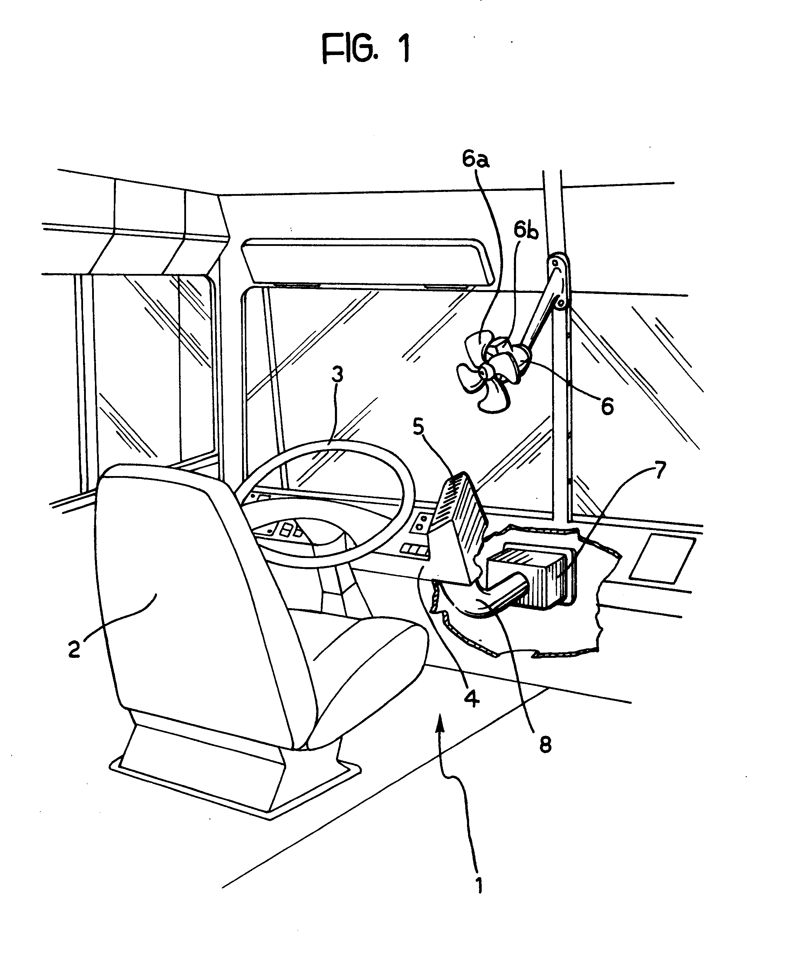

With reference to Figure 1, the passenger compartment of a vehicle is generally indicated 1 and within it is shown in particular a seat 2 for the driver, a steering wheel 3, a dashboard 4 on which an outlet 5 is located, and an electric fan 6 constituted by an impeller 6a and an electric motor 6b.

The electric fan 6 and the outlet 5, which communicates with the external dynamic air intake 7 through a duct 8, constitute two sources for directing pressurised air into the passenger compartment. These sources, which are actuated under particular conditions by a device described in detail below, are each able to generate a jet of air towards the driver's face.

From determinations and analyses of a medical character carried out for the applicants, it is found that the stimulus caused by the blowing of air at the face can be very useful for rousing the attention of the driver subject to torpor or starting to fall asleep, particularly as a result of a tedious and uniform journey.

Clearly, the two air sources 5 and 6 may be mounted simultaneously in the passenger compartment, as in the example illustrated in Figure 1, or, alternatively, they may be provided separately. However, the electric fan 6 can generate an effective air jet whatever the speed of movement of the vehicle, while the opening 5 which takes air from the dynamic air intake 7 can generate a similar flow only if the inlet speed of the air at the dynamic air intake 7 is sufficient, that is to say, if the speed of movement of the vehicle is greater than a certain value. One would therefore understand that the simultaneous presence of the two air sources could be more convenient, since the electric fan 6 could be actuated at low travelling speeds, while the opening 5 could operate at higher travelling speeds so as to generate the required jet of air without the operation of a fan.

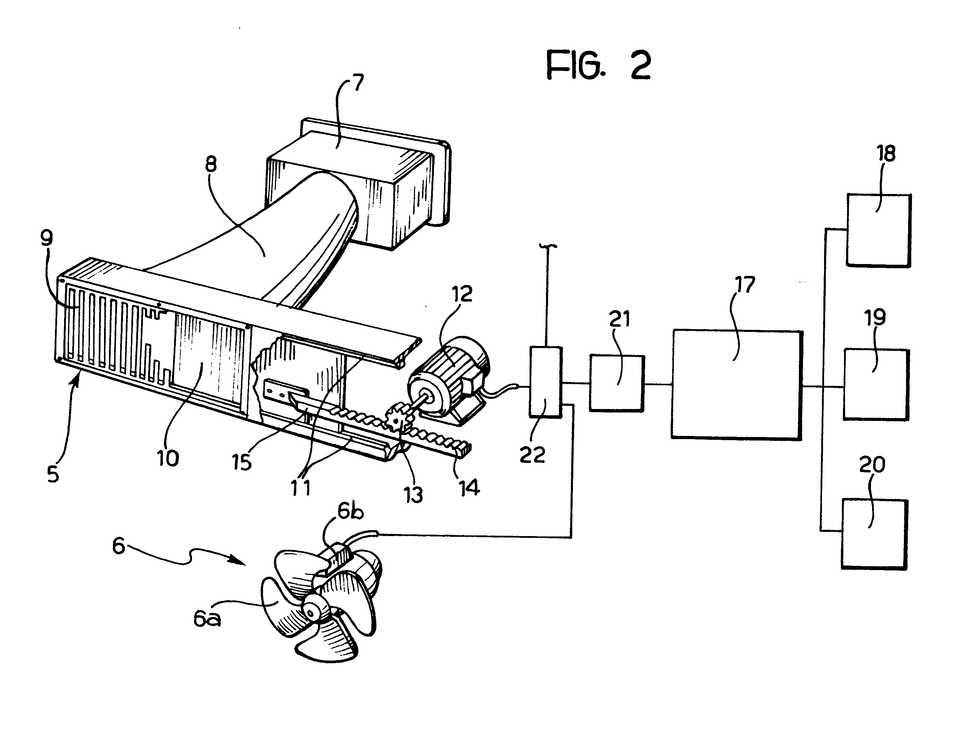

Figure 2 shows the two pressurised-air sources 5 and 6 with their control members.

The fan 6 includes, as stated, the impeller 6a and the electric motor 6b. The aperture 5 is formed by a grille 9 located on the dashboard and through which the air is discharged, and is provided with a movable shutter 10 located behind the grille 9. The shutter 10 is slidable on guides 11 to open and close communication between the outlet 5 and the external dynamic intake 7. The movement of the shutter 10 is controlled, for example, by a reversible electric motor 12 on the output shaft of which is mounted a pinion 13 coupled to a rack 14 formed on a rod 15 fixed to the shutter 10. Thus, the rotation of the pinion 13 causes the translation of the shutter 10 in one direction or the other. The selective control of the motors 12 or 6b occurs through a device whose logic system is illustrated in the right-hand part of Figure 2. A processing unit 17 receives signals from three sensor groups 18, 19, 20. The sensors 18, for example, are sensors of the activation of electrical controls of the vehicle, such as the windscreen wipers, headlights or dipped lights, fog lights, and rear foglights, whose operation by the driver indicates tiring environmental conditions like rain, darkness, fog.

The sensor group 19, on the other hand, detects, for example, specific driving conditions such as the number of hours of driving effected, a long section of road without a curve, constant travelling speeds, or situations which are particularly tedious to the driver.

The sensor group 20, however, detects, for example, parameters directly indicative of tiredness, such as a decrease or increase in the pressure on the back of the seat 2, which could result from temporary relaxation of the driver or sharp turns of the steering wheel 3 interspersed by long idle pauses which could result from torpor, "dropping off" with sharp re-awakening.

The sensors 18, 19 and 20 are conventional in the field of detection of the conditions described above and will not be described in detail in that they are well known to experts in the art.

The function of the unit 17 is to process the signals from the sensor groups 18, 19, 20, compare them with predetermined critical reference data, and provide the enabling signal for the activation of the air sources 5 and/or 6 when these signals are indicative of situations corresponding to these critical data. As a result of this activation, a jet of pressurised air is generated towards the driver's face with the effect of shaking him out of possible torpor and effectively restoring his attention to driving.

Use may be made of a timer 21 for delaying the operating time of one and/or the other of the sources 5, 6, and a possible vehicle speed sensor 22 for actuating the electric motor 12 and the electric motor 6b according to whether the speed of the vehicle is sufficient to generate an adequate jet of air through the dynamic air intake or whether the speed of movement is low and it is therefore necessary to operate the fan 6 as the pressurised-air source.

Clearly, the blowing of air could also be associated with other stimuli (audible, visual), particularly whenever it is assumed that its effectiveness could be reduced due to the presence of forced ventilation in the cab or the opening of deflectors.

Furthermore, the sensors for directly checking the critical driving conditions could be replaced by a simple timer arranged to activate the air source 5 or 6 at predetermined intervals.

## Claims

1. Device for improving the driving safety of a vehicle, characterised in that it comprises:

a pressurised-air source within the passenger compartment (1) of the vehicle including a fan (5),

sensor means (18, 19, 20) for sensing driving conditions indicative of a possible tendency of the driver to torpor,

actuator means (6b, 10) for the pressurised-air source (5, 6),

an electronic control unit (17) supplied by signals from the sensors (18, 19, 20) and arranged to operate the actuator means (6b, 10) when the conditions detected by the sensors (18, 19, 20) correspond to predetermined critical conditions.

2. Device according to Claim 1, characterised in that the actuator means comprise an electric motor (6b) which rotates the fan (6).

3. Device according to Claim 1 or Claim 2, characterised in that the pressurised-air source further comprises an outlet (5) communicating with an external dynamic air intake (7) of the vehicle, and in that the actuator means include a motor-driven movable shutter which controls communication between the outlet and the external dynamic air intake (7).

# FIG. 1

# FIG. 2

0227610

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 146 528  (MANABU OGATA) <br> * Whole document * <br> --- | 1 | B 60 K  28/00 <br> B 60 H   1/24 |
| Y | EP-A-0 147 539  (NISSAN MOTOR) <br> * Whole document * <br> --- | 1 | |
| A | FR-A-1 067 314  (DAIMLER-BENZ) <br> * Whole document * <br> --- | 1,2 | |
| A | US-A-2 301 512  (J. BREESE) <br> * Whole document * <br> --- | 1,3 | |
| A | AT-B-  347 798  (JENBACHER WERKE) <br> * Page 4, lines 29-35; figure 3 * | 1,2 | |
| | ----- | | **TECHNICAL FIELDS SEARCHED (Int. Cl.4)** <br><br> B 60 K <br> B 60 H <br> B 61 C |

The present search report has been drawn up for all claims

| Place of search | Date of completion of the search | Examiner |
|---|---|---|
| THE HAGUE | 19-03-1987 | LINTZ C.H. |